## Europäisches Patentamt

## European Patent Office

## Office européen des brevets

(19)

(11) Veröffentlichungsnummer: **0 119 307**
**A1**

(12) **EUROPÄISCHE PATENTANMELDUNG**

(21) Anmeldenummer: 83112178.5

(22) Anmeldetag: 03.12.83

(51) Int. Cl.³: **A 01 G 3/00,** A 01 F 29/06,
H 02 K 7/14

(30) Priorität: **07.12.82 CH 7103/82**

(43) Veröffentlichungstag der Anmeldung: **26.09.84**
**Patentblatt 84/39**

(84) Benannte Vertragsstaaten: **AT BE CH DE FR GB IT LI NL**

(71) Anmelder: **HELPMANN Trust reg., Mitteldorf 1,**
**FL-9490 Vaduz (LI)**

(72) Erfinder: **Stoeckler, Reinhold, Untere Bruech 110,**
**CH-8706 Meilen (CH)**

(74) Vertreter: **Büchel, Kurt F., Dr., Austrasse 4,**
**FL-9490 Vaduz (LI)**

(54) **Kleinshredder.**

(57) Der Kleinshredder (1) für Gartenabfälle und Astwerk enthält einen rotierenden Zylinder (6), auf dem sich eine Messerkante (15) befindet. Das Gegenmesser (30) ist am Gehäuse (7) angebracht. An jeder Stirnseite des Zylinders (6) ist eine Scheibe (17) angeordnet, die ihn überragt und an ihrem Umfang ventilatorflügelartig verschränkt ist. Bei Rotation wird allenfalls nach außen drängendes Feingut wieder in die Mitte in Richtung zur Austragöffnung (13) geschleudert. Es kann auch auf dem Zylinder (6) nach innen zu wenigstens eine zusätzliche gleichartige Kreisringscheibe (26) vorgesehen sein.

- 1 -

Die Erfindung bezieht sich auf einen Kleinshredder, insbesondere für Gartenabfälle, mit einem Gehäuse, in dem ein wenigstens eine Zerkleinerungskante, ein Messer od.dgl. tragender, von einem Motor antreibbarer Rotationskörper vorgesehen ist, dem zu zerkleinerndes Gut einlasseitig zuführbar und das zerkleinerte Gut abfuhrseitig entnehmbar wobei der Rotationskörper an wenigstens einer Stirnseite eine seinen Umfang überragende Scheibe aufweist.

Für das Zerkleinern von Gartenabfällen od.dgl. ist bisher schon ein Rohr mit einem nach Art eines Mixermessers ausgebildeten Seitenschneider vorgeschlagen worden. Wurden diesem Messer härtere Gegenstände, wie Astwerk, zugeführt, so kam es häufig zum Stillstand, weil auf Grund der geringen rotierenden Masse keine Energiereserven zur Verfügung standen. Damit konnte also höchstens dünnes Astwerk zerkleinert werden. Es ist aber bekanntlich zweckmässig, dem Kompost auch zerkleinerte Aeste zur Auflockerung beizugeben, und diese mussten daher von Hand aus mühevoll zerkleinert werden.

Gemäss einem anderen Vorschlag wird eine Art Raffelscheibe verwendet, doch waren bei diesem Gerät abfuhrseitig keine Vorkehrungen getroffen, um das zerkleinerte Produkt hinauszubefördern. Insbesondere feuchtes Gut, wie Gras od.dgl., tendiert aber dazu, am Gerät kleben zu bleiben, so dass dieses nach kurzer Zeit verstopft ist.

Nun hat man zwar für grössere Shredder bereits eine Messerwalze vorgeschlagen. Solche meist stationäre Anlagen können verhältnismässig offen sein und mit verschiedenen Vorrichtungen versehen werden, die einerseits der Sicherheit dienen, anderseits ein Verstopfen verhindern. Bei kleineren Shreddern in Kompaktbauweise für den Hobbygärtner ist es dagegen auf Grund von Platzmangel nicht möglich gewesen, die von grossen Shreddern bekannten Fördereinrichtungen zur Abfuhr des zerkleinerten Produktes einzubauen.

Aus der DE-GM 81 21.651 ist nun auch ein Kleinshredder der eingangs genannten Art bekannt geworden. Trotz der unleugbar damit erzielten Verbesserung ergaben sich teilweise Schwierigkeiten dadurch, dass während des Betriebes das zerkleinerte Material von der Mitte des Rotationskörpers zu den Stirnseiten und an den dort angebrachten Scheiben hochwanderte, wobei es den Spalt zwischen dem Umfang der Scheibe und dem Gehäuse verstopfte, bezw. sogar auf die äussere Seite der Scheibe und damit zu der Lagerwelle gelangte, wo es sich festsetzte und den Motor letztlich blockierte.

Der Erfindung liegt die Aufgabe zugrunde, innerhalb eines Kleinshredders für einen geordneten Materialfluss Sorge zu tragen, so dass Verstopfungen des Gerätes und die damit verbundene Gefahr einer Ueberhitzung des Antriebsmotors mit Sicherheit vermieden sind. Diese Aufgabe wird erfindungsgemäss dadurch gelöst, dass die Scheibe an ihrem Umfang mit einwärts gerichteten Ventilatorflügeln versehen ist.

Diese Flügel, deren - in Drehrichtung gesehen - vordere Kante nach aussen, die hintere Kante nach innen gewendet sind, schlagen nun bei der üblichen hohen Tourenzahl von z.B. 3000 Upm alle gegebenenfalls nach aussen dringenden, zerkleinerten Teilchen wieder zurück in die Mitte, wo sie zur zentralen Abfuhröffnung weitergeleitet werden.

Darüber hinaus wird ein, wenn auch schwacher, einwärts gerichteter Luftstrom erzeugt, der allenfalls an der Scheibe hochwandernde Feinteile - sobald sie in den Spalt gelangen - wieder nach innen bläst. Es können somit nur solche Teile durch den Spalt gelangen, die direkt, unter Ueberwindung der Luftströmung, in ihn hineingeschleudert werden. Dies sind erfahrungsgemäss aber nur wenige Prozente der Menge, die bei einer gewöhnlichen Scheibe nach dem Stand der Technik nach aussen wanderte. Diese geringe Menge fällt im Gehäuse nach unten und wird durch Bodenlöcher ausgetragen.

Die Scheibe kann z.B. ringförmig sein und vorzugsweise die Stirnwandung des Rotationskörpers selbst bilden, wobei die in Drehrichtung hinten gelegenen Enden der Ventilatorflügel zur Mitte des Rotationskörpers und deren in Drehrichtung vorne gelegenen Enden zum Gehäuse gebogen sind. Auf diese Weise streicht die Luft ohne weitere Führungsmassnahmen der Aussenmantelfläche des Rotationskörpers entlang, und die über den Umfang des Rotationsköpers hinausragende Scheibe verhindert ohne verbleibenden Spalt rein mechanisch, dass zerkleinertes oder unzerkleinertes Gut seitlich zu den Lagern gelangen kann. Falls der Rotationskörper nur einseitig gelagert ist, ist es vorteilhaft, wenn die Scheibe wenigstens an der dem Lager zugewandten Stirnseite angeordnet ist.

Herstellungsmässig lässt sich der Strömungsgenerator am einfachsten und billigsten so verwirklichen, dass die Ventilatorflügel aus einer Scheibe durch vom Umfang her radial einwärts geführte Schnitte und Herausbiegen bzw. Verschränken der Schnittkanten gebildet sind. Dadurch bleiben die oben erwähnten, einer Scheibe zukommenden Vorteile, wie insbesondere auch eine erleichterte Montierbarkeit am Rotationskörper, erhalten, und es wird
dennoch auf kostengünstige Weise ein Axiallüfter geschaffen.

Im Falle der Herstellung wenigstens eines Teiles des
Rotationskörpers aus einem giessbaren Material, beispielsweise aus Aluminiumdruckguss, ist es herstellungsgemäss
günstig, wenn die Scheibe mit dem Rotationskörper einstückig ist, so dass Montagekosten eingespart werden
können.

Wie oben bereits angedeutet, ist es bevorzugt, wenn am
Rotationskörper wenigstens zwei, jeweils einen Teilluftstrom von einer Stirnseite gegen dessen Mitte richtende
Ventilatorkörper, gegebenenfalls auch noch zumindest einer
zwischen seinen Stirnseiten, angeordnet sind. Die
Anordnung zweier stirnseitiger Ventilatorkörper ermöglicht
nämlich eine zweiseitige Lagerung des Rotationskörpers,
ohne eines von den Lagern der Verstopfungsgefahr auszusetzen, die hauptsächlich durch das Eindrehen langer Teile
an dem dem Lager benachbarten Wellenabschnitt gegeben ist.

Wenigstens eine analoge Scheibe, deren Umfang ebenfalls
in Ventilatorflügeln unterteilt ist, kann aber vorteilhaft
auch - vorzugsweise paarweise - in einer zwischen und
parallel zu den Stirnseiten des Rotationskörpers gedachten
Ebene angeordnet sein; dabei kann die in Drehrichtung jeweils vorne gelegene Kante eines Ventilatorflügels als
Schneidkante ausgebildet sein, in welchem Fall die
mittleren Scheiben

0119307

eine doppelte Funktion haben. Einerseits wirken sie wie
die Schneidscheiben großer Shredder zerkleinernd, anderseits sorgen sie für den nötigen Luftstrom, verstärken
diesen und drängen durch ihre Schrägstellung das zu zerkleinernde Gut auch mechanisch von den Stirnenden weg.

Eine besonders kompakte Ausbildung und eine Verbilligung
des Gerätes ergibt sich, wenn der mit dem Strömungsgenerator verbundene Rotationskörper hohlzylindrisch ausgebildet
ist, wie dies schon vorgeschlagen wurde, und wenn dieser
Hohlzylinder als Außenrotor des den Strömungsgenerator und
den Rotationskörper antreibenden Motors ausgebildet ist.
Eine solche Ausführungsform ist selbst dann vorteilhaft,
wenn der Strömungsgenerator nicht in der erfindungsgemässen
Weise ausgebildet ist, weshalb ihr selbstständige Bedeutung
zukommt.

Eine weitere Vereinfachung und Verbilligung ergibt sich,
wenn der Strömungsgenerator einstückig mit Kühlluft gegen
den Antriebsmotor führenden Flächen versehen ist, so daß
dieser Strömungsgenerator eine mehrfache Funktion erhält.
Zwar hat man    derartige Flächen schon in der genannten DE-GM vorgeschlagen, doch ergibt sich bei der neuerungsgemäßen Ausbildung die vorteilhafte Möglichkeit, diese
einstückig mit dem Strömungsgenerator zu vereinen, was
die Herstellung vereinfacht und die Montage erleichtert.

Weitere Einzelheiten der Neuerung ergeben sich aus der nachfolgenden Beschreibung eines Ausführungsbeispieles, das in

> Fig. 1 schematisch in einem Längsschnitt durch das Gehäuse entsprechend der Linie I-I der Fig. 2 und in
>
> Fig. 2 in einem Schnitt nach der Linie II-II der Fig. 1 gezeigt ist.

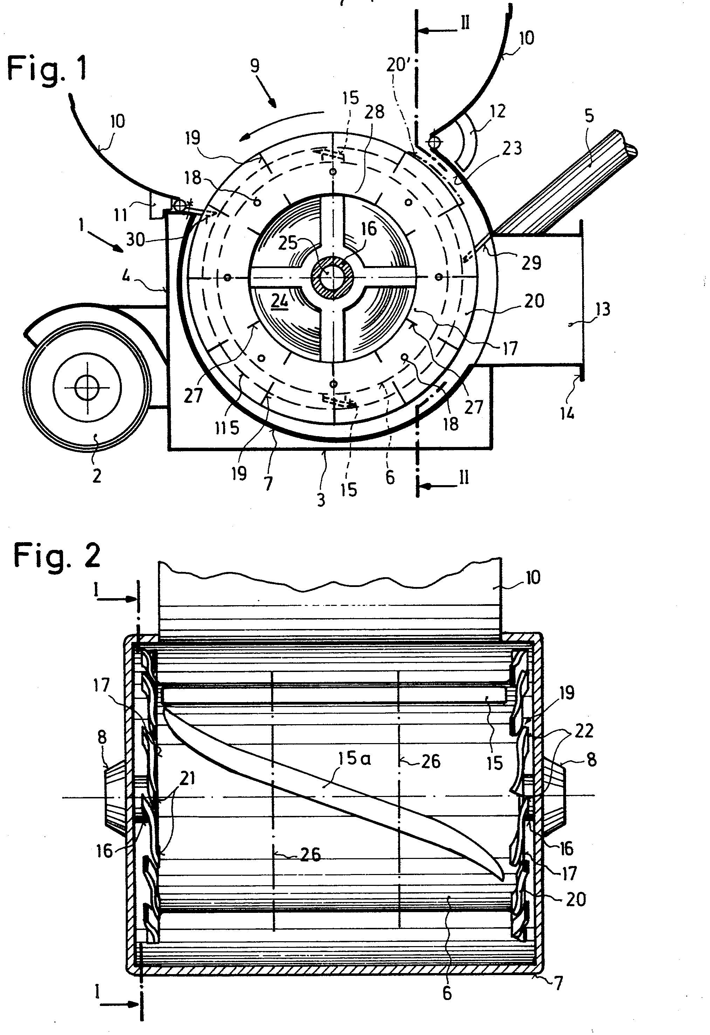

Ein Kleinshredder 1 für Gartenabfälle weist ein auf Rädern 2 fahrbares und auf einer Bodenplatte 3 abstellbares Gehäuse 4 auf, das nach Art von Rasenmähern mittels zweier Griffstangen 5 (nur eine ist dargestellt) an jeden gewünschten Ort dirigierbar ist. Wichtigster Bestandteil des Shredders 1 ist ein Rotationskörper in Form eines Hohlzylinders, der in einem Rotationsgehäuseteil 7 des Gehäuses 4 in seitlichen Lagern 8 (Fig. 2) gelagert ist.

Das Rotationsgehäuse 7 ist nach oben zur Bildung einer Einlaßöffnung 9 zu öffnen und besitzt zu diesem Zwecke zwei Klapptüren 10, die sich im geöffneten Zustand mittels Stützen 11 bzw. 12 in einer Lage halten, in der sie einen Einfülltrichter für das zu zerkleinernde Gut bilden und so eine Verschmutzung des Gehäuseäußeren durch herabfallende Teile verhindern.

Seitlich ragt aus dem Rotationsgehäuse 7 ein Abführstutzen

0119307

13 heraus, der unmittelbar oder über die dargestellten
Flansche 14 mit einem Aufnahmebehälter für das Feingut
verbunden sein kann. In letzterem Falle ist es zweckmäßig,
eine (nicht dargestellte) an sich bekannte Schnellkupplung
vorzusehen, mit deren Hilfe der Aufnahmebehälter rasch angeschlossen und zur Entleerung wieder entfernt werden kann.

Der Rotationskörper 6 trägt wenigstens eine Zerkleinerungskante, die prinzipiell auch jeweils raspel- oder raffelartig ausgebildet sein kann, vorzugsweise jedoch an
wenigstens einem Messer 15 vorgesehen ist. Insbesondere
sind zumindest zwei solcher Messer 15 zur Vergleichmäßigung
der Motorbelastung und zur Vermeidung von Unwucht in
gleichmäßigen Winkelabständen über den Rotationskörper 6
verteilt, wie dies an Hand der beiden Messer 15 in Fig. 1
gezeigt ist.

Die Messer 15 stehen vorzugsweise vom Rotationskörper 6
tangential oder schräg (wie dargestellt) etwas ab, so daß
sich unter ihnen, gegen die Rotationsachse zu ein Raum ergibt, in dem sich an sich leicht Feingut sammelt und die
Schneidwirkung beeinträchtigen kann. Deshalb ist vorzugsweise auch die hintere Messerkante, wie aus Fig. 1 ersichtlich, von der Außenmantelfläche des Rotationskörpers 6
etwas abgehoben, so daß sich unter dem Messer 15 ein durchgehender Schlitz bildet, durch den das jeweils frisch geschnittene Gut etwaige angesammelte Feinteile austreiben

0119307

kann (Selbstreinigung) bzw. der auch leichter zu reinigen
ist.

Wie Fig. 2 deutlich zeigt, ist jedes Messer 15 etwa entlang
der Erzeugenden des Hohlzylinders 6 angeordnet, es kann
jedoch auch ein Messer 15a vorgesehen sein. Ein schräg
über den Mantel des Rotationskörpers 6 verlaufendes Messer 15a hat den Vorteil einer verbesserten Schneidwirkung,
besitzt aber für die Herstellung und die Montage den Nachteil, daß es schraubenlinienförmig verwunden sein muß. Dagegen ist ein gerades Messer 15 einfacher herstellbar und
leicht zu montieren und wird daher in der Praxis bevorzugt
sein. Ein Mittelweg kann gegebenenfalls dadurch eingeschlagen werden, daß eine Mehrzahl kleiner Messerabschnitte, die
jeweils gerade ausgebildet sind, entlang der Schraubenlinie des Messers 15a angeordnet wird.

Beim Zerkleinern, insbesondere von feuchtem Gut, besteht
eine Gefahr darin, daß dasselbe zwar von den Messern 15 im
Vorbeilauf an der Ausführöffnung 13 tangential abgeschleudert wird, dort aber kleben bleibt, so daß dort die
Öffnung 13 mit der Zeit zuwächst. Die Folge davon ist ein
Materialstau, der bewirkt, daß zu zerkleinerndes Gut seitlich zu den Lagern 8 (Fig. 2) und dort in den Bereich der
sich drehenden Welle 16 gelangt. Besonders dann, wenn sich
darunter langfaseriges Gut, wie Gras, befindet, bildet sich
ein immer größer werdender Wickel um die Welle 16, worauf binnen kurzem die Verstopfung gegeben ist. Der Motor vermag dann die Last nicht mehr zu bewältigen, läuft heiss und wird beschädigt.

Um dies zu vermeiden und für einen guten Abtransport des zerkleinerten Feingutes zu sorgen, waren schon bisher Scheiben an den beiden Stirnseiten des Rotationskörpers vorgesehen, doch konnten diese nicht verhindern, dass Abfall seitlich zu den Lagern 8 gelangte. Erfindungsgemäss sind - wie erwähnt - Scheiben 17 mit Ventilatorflügeln 20 vorgesehen, welch letztere das nach aussen drängende Material in die Mitte zurückschleudern und so nicht nur für die Reinhaltung der Oeffnungen 9 und 13, sowie des Spaltes 31 sorgen, sondern dadurch auch verhindern, dass zu zerkleinerndes Gut  zu den Lagern 8 bzw. zur Welle 16 gelangt, indem das Material und ein Luftstrom von den stirnseitigen Enden des Rotationskörpers 6 her gegen dessen axiale Mitte geführt wird.

Zu diesem Zweck sind an beiden Stirnseiten des Rotationskörpers 6 (bei einseitiger Lagerung desselben mag es an der dem Lager zugewandten Stirnseite genügen) gemäss der dargestellten bevorzugten Ausführung ringförmige Scheiben 17 mittels Schrauben 18 befestigt. Diese Scheiben 17 besitzen einen grösseren Durchmesser als der Hohlzylinder 6 und begrenzen daher seine Aussenmantelfläche an den Seiten schon rein mechanisch. Zusätzlich aber sind die Scheiben 17 in gleichmässigen Winkelabständen an ihrem Aussenumfange mit Einschnitten 19 versehen, wobei an den so entstandenen

0119307

Schneidkanten der Aussenrand der Scheiben 17 in der aus
Fig. 2 ersichtlichen Weise herausgebogen und zweckmässig
dabei verschränkt ist. Dabei ist die Verschränkung so
vorgesehen, dass die in Drehrichtung des Rotationskörpers 6
hinten gelegenen Enden 21 der durch die Schnitte 19 entstandenen Flügel 20 gegen die Mitte des Rotationskörpers 6
gebogen sind, wogegen die in Drehrichtung vorne gelegenen
Enden 22 nach aussen, d.h. zum Rotationsgehäuse 7 hin,
weisen. Mit den so gebogenen bzw. verschränkten Ventilatorflügeln 20 ergibt sich eine Luftströmung von der Stirnseite her zur axialen Mitte des Hohlzylinders 6 hin, wo
die Messer 15 für einen Weitertransport der Luft zur
Abfuhröffnung 13 sorgen. Gewünschtenfalls kann das
Rotationsgehäuse 7 im Bereiche des Fusses der Ventilatorflügel 20 von ihm zur Stirnseite des Hohlzylinders 6 gekehrte Luftleitflächen (nicht dargestellt) aufweisen. Zur
Vereinfachung der Bauweise können aber derartige Luftleitflächen entfallen, wie überhaupt die Anordnung des
Strömungsgenerators in Form der Scheiben 17 Luftführungen
und -umlenkungen weitgehend entbehrlich macht, die unter
Umständen den Wirkungsgrad des Strömungsgenerators herabsetzen können.

Es sei erwähnt, dass zur Begrenzung des Stromes im Bereiche einer Wand 23 des Rotationsgehäuses 7
Leitflächen 29 vorgesehen sein können. In diesem Falle
ist es zweckmässig, wenn diese Leitflächen als wenigstens
ein den Messern 15 entgegengerichtetes Abstreifmesser 29
ausgebildet sind, so dass nicht nur die Luft zur Oeffnung
13 umgelenkt, sondern zusätzlich an der Aussenseite der
Messer 15 etwa anhaftendes Gut abgestreift und in die
Oeffnung 13 gebracht wird. Deshalb ist wenigstens ein solches Abstreifmesser 29, bevorzugt in der dargestellten
Schräglage und nahe der Oeffnung 13, an der Wand 23 angeordnet. Bei Anordnung mehrerer Abstreifmesser 29 hintereinander ist die Ausbildung zweckmässig so getroffen,
dass das in Drehrichtung jeweils hintere Messer 29 ein
Stück näher an die Umfangsbahn des Messers 15 reicht als
das jeweils davor liegende Abstreifmesser 29.

Eine besonders kompakte Anordnung ergibt sich gemäss der
Darstellung dadurch, dass der Antriebsmotor für den
Rotationskörper 6 in an sich bekannter Weise bevorzugt
im Inneren des Hohlzylinders 6 untergebracht ist. Um
aber Material und Bearbeitung für gesonderte Zylinderkörper für den Stator des Motors und den Hohlzylinder 6
einzusparen und den Shredder noch kompakter zu gestalten,
bildet der Hohlzylinder 6 einen Aussenrotor für einen
Innenstator 24, wobei seine Welle 16 als Hohlwelle
ausgebildet ist.

lm Rahmen der Erfindung sind zahlreiche verschiedene
Varianten möglich; so können die Scheiben 17 bei Herstellung des Rotationskörpers 6 im Druckguss einstückig
mitgegossen sein. Der Rotationskörper 6 kann nach Art
grosser Shredder als Schneidscheibenpaket ausgebildet
werden, wobei gegebenenfalls wenigstens eine der Schneidscheiben durch Verschränkung auch als Ventilator wirkt.
Derartige Scheiben in der axialen Mitte des Rotationskörpers 6 begrenzen auch den dorthin gerichteten Luft-
und Materialstrom und lenken ihn gegen die Abfuhröffnung 13, was insbesondere dann von Vorteil ist, wenn
aus konstruktiven Gründen die Anordnung einer Scheibe 17
an der einem Lager 8 zugewandten Stirnseite des
Rotationskörpers 6 bei nur einseitiger Lagerung desselben nicht möglich wäre.

Selbstverständlich sind auch andere Arten von Strömungsgeneratoren denkbar; beispielsweise können am Rotationskörper 6 auch mehrere scheibenförmige Ventilatoren, insbesondere paarweise zu beiden Seiten seiner Mitte, z.B. in den Ebenen 26 (Fig. 2), angeordnet werden, die dann zweckmäßig an den Kanten 22 und/oder an ihren Umfangskanten mit Schneiden versehen sind bzw. entsprechend dem Ventilatorflügel 20' ausgebildet sind, um auch Zerkleinerungsaufgaben zu erfüllen.

Falls der Motor 24 entweder, wie dargestellt, in den Hohlzylinder 6 eingebaut oder wenigstens nahe den Ventilatorscheiben 17 angeordnet ist, können die letzteren gegen den Motor 24 zu ebenfalls als Kühlventilator ausgebildet sein. Gemäß Fig. 1 sind zu diesem Zwecke analog zu den Einschnitten 19 weitere Einschnitte 27 an der Innenseite (radial gesehen) der Scheiben 17 vorgesehen, wobei die so entstehden Ventilatorflügeln 28 ebenso gebogen sind wie die Flügeln 20. Wird die Herstellung der Flügeln 20 und 28 in einem einzigen Arbeitsgang vorgenommen, so ergibt sich eine Vereinfachung und Verbilligung, wie überhaupt durch die einstückige Ausbildung mit dem schon bisher bekannten Kühlventilator nicht nur die Herstellung verbilligt, sondern auch die Montage erleichtert wird.

0119307

Wie erwähnt, kann die Ausbildung der Zerkleinerungskante
je nach der beabsichtigten Anwendung verschieden sein. Die
dargestellte Anordnung eignet sich, nicht zuletzt auch
dadurch, dass durch die Ausbildung des Rotationskörpers
als Aussenrotor des Stators 24 seine Masse durch die Erregerpole erhöht wird, besonders zum Zerschneiden harter
Abfälle,wie von Aesten,die gegen die Aussenmantelfläche des
Rotationskörpers 6 gehalten und durch die Messer 15 zerspant werden. Dabei ist zweckmässig wenigstens ein Gegenmesser 30 vorgesehen, das am Gehäuse 4 befestigt ist und
bis zur strichliert angedeuteten Umfangsbahn 115 der
Messer 15 reicht. Dieses Gegenmesser ist vorzugsweise als
Wendemesser mit zwei wahlweise zu verwendenden Schneidekanten ausgebildet. Werden dagegen, z.B. in den Ebenen 26,
zusätzliche Scheiben 17 angebracht, so zerschneiden diese
allenfalls quer in die Öffnung 9 fallende Äste.

PATENTANSPRUECHE

1. Kleinshredder mit einem Gehäuse, in dem ein wenigstens eine Zerkleinerungskante tragender, von einem Motor antreibbarer Rotationskörper vorgesehen ist, dem zu zerkleinerndes Gut einlasseitig zuführbar und das zerkleinerte Gut abfuhrseitig entnehmbar ist, wobei der Rotationskörper an wenigstens einer Stirnseite eine seinen Umfang überragende Scheibe aufweist, dadurch gekennzeichnet, dass die Scheibe (17) an ihrem Umfang mit einwärts gerichteten Ventilatorflügeln (20) versehen ist.

2. Kleinshredder nach Anspruch 1, dadurch gekennzeichnet, dass die Scheibe (17) kreisringförmig ausgebildet ist.

3. Kleinshredder nach Anspruch 2, dadurch gekennzeichnet, dass der Rotationskörper hohlzylindrisch als Aussenrotor des Antriebsmotors ausgebildet ist und die kreisringförmige Scheibe (17) auch entlang ihres inneren Umfanges mit Ventilatorflügeln (28) versehen ist.

4. Kleinshredder nach einem der vorhergehenden Ansprüche, dadurch gekennzeichnet, dass die Ventilatorflügel (20, 28) aus der Scheibe (17) durch vom Umfang her radial einwärts geführte Schnitte (19, 27) und Herausbiegen bzw. Verschränken der Schnittkanten (21,22) gebildet sind.

5. Kleinshredder nach einem der vorhergehenden Ansprüche, dadurch gekennzeichnet, dass die Scheibe (17) mit dem Rotationskörper (6) einstückig ausgebildet ist.

6. Kleinshredder nach einem der vorhergehenden Ansprüche, dadurch gekennzeichnet, dass am Rotationskörper (6) wenigstens eine in einer zwischen seinen Stirnseiten und parallel zu diesen angeordneten Ebene (26) liegende, zusätzliche Kreisringscheibe vorgesehen ist, deren Umfang ebenfalls Ventilatorflügel (20) aufweist.

7. Kleinshredder nach Anspruch 6, dadurch gekennzeichnet, dass wenigstens die in Drehrichtung jeweils vorne gelegene Kante eines zusätzlichen Ventilatorflügels (20) als Schneidekante ausgebildet ist.

8. Kleinshredder nach einem der vorhergehenden Ansprüche, dadurch gekennzeichnet, dass - in Drehrichtung gesehen jenseits der Abfuhröffnung (13) - wenigstens eine Luftleitfläche (29) vorgesehen und vorzugsweise als Abstreifmesser nahe der Umfangsbahn der Zerkleinerungskante (15) ausgebildet ist.

Fig. 1

Fig. 2

0119307

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE-C- 955 370 (MESSNER)<br>* Seite 2, Zeilen 36-90; Figuren 1,4,5 *<br><br>--- | 1,2,5 | A 01 G 3/00<br>A 01 F 29/06<br>H 02 K 7/14 |
| A | FR-A-2 373 957 (WILMINK)<br>* Seite 2, Zeilen 21-27; Seite 3, Zeilen 1-24; Figur 1 *<br><br>--- | 1 | |
| A | DE-C- 851 226 (WALLISER)<br>* Seite 2, Zeilen 30-72; Figuren 1,2,3 *<br><br>--- | 1,3 | |
| A | DE-C- 973 853 (SCHÄFER)<br>* Seite 2, Zeilen 10-121; Figur 1 *<br><br>----- | 1,3 | |

RECHERCHIERTE SACHGEBIETE (Int. Cl. 3)

A 01 G
A 01 F
H 02 K

Der vorliegende Recherchenbericht wurde für alle Patentansprüche erstellt.

| Recherchenort | Abschlußdatum der Recherche | Prüfer |
|---|---|---|
| DEN HAAG | 27-03-1984 | VERMANDER R.H. |